# EUROPÄISCHE PATENTSCHRIFT

(11) **EP 1 764 241 B1**
(45) Veröffentlichungstag und Bekanntmachung des Hinweises auf die Patenterteilung: **02.12.2009**
(21) Anmeldenummer: 06116928.0
(22) Anmeldetag: 11.07.2006
(51) Int. Cl.: B60G 15/14, B60G 11/27

(54) **System, bestehend aus einer Luftfeder und einem Träger für die Luftfeder**
System consisting of an air spring and a support for the air spring
Système consistant en un ressort pneumatique et un support pour le ressort pneumatique

(30) Priorität: 15.09.2005 DE 102005044210
(43) Veröffentlichungstag der Anmeldung: 21.03.2007
(73) Patentinhaber: Continental Aktiengesellschaft, 30165 Hannover (DE)
(72) Erfinder: Oldenettel, Holger, 30900 Wedemark (DE); Pielock, Ralf, 29690 Essel (DE)

(56) Entgegenhaltungen:
- EP-A2- 0 983 882
- DE-A1- 19 922 798
- FR-A1- 2 820 180

## Beschreibung

Die Erfindung betrifft ein System, das folgende Bestandteile enthält:
- eine Luftfeder mit einem Rollbalg, der an seinem unteren Ende an einem Abrollkolben und an seinem oberen Ende an einem Luftfederdeckel befestigt ist, und der ein Luftvolumen umschließt,
- einen Träger, der oberhalb des Luftfederdeckels angeordnet ist, und an dem Luftfederdeckel um die Längsachse der Luftfeder drehbar befestigt ist,
- eine Schlauchleitung, die an eine in dem Luftfederdeckel liegende Einlassöffnung angeschlossen ist, und die ein Dehnelement aufweist, das bei Drehbewegungen des Luftfederdeckels um die Längsachse der Luftfeder zumindest bereichsweise eine elastische Verformung der Schlauchleitung zulässt.

Ein derartiges System ist aus der DE 199 22 798 A1 bekannt. Die Luftfeder ist Teil eines McPherson Federbeins, das an der lenkbaren Vorderachse eines Kraftfahrzeuges eingebaut wird. Hierbei stützt sich das Luftfederbein an seinem unteren Ende auf einem Radträger und an seinem oberen Ende an einem Träger ab, der Teil des Kotflügels der Karosserie ist. Die Abstützung der Luftfeder des Luftfederbeins erfolgt an ihrem oberen Ende über ein Drehgelenk, so dass sich das Luftfederbein bei einer Lenkbewegung des Rades um die Längsachse der Luftfeder verdrehen kann. Neben der Luftfeder und dem Träger enthält das System zusätzlich eine Schlauchleitung, die einerseits an die Luftfeder und andererseits an eine karosseriefeste Druckluftquelle angeschlossen ist. Über die Schlauchleitung kann die Luftfeder mit Druckluft befüllt werden, um den Fahrzeugaufbau anzuheben. Während einer Lenkbewegung des Rades dreht sich der Anschluss der Schlauchleitung mit der Luftfeder. Bei dem aus der DE 199 22 798 A1 bekannten System ist die Schlauchleitung oberhalb des Luftfederdeckels als Dehnelement in Form einer Wendel ausgebildet, deren Längsachse in etwa in Verlängerung zur Längsachse der Luftfeder verläuft. Durch die Wendel wird sichergestellt, dass die Schlauchleitung einer Lenkbewegung des Rades im Bereich der Luftfeder folgen kann, ohne die Bewegungsfreiheit des Rades einzuschränken und ohne die Schlauchleitung zu beschädigen. Es ist jedoch festzustellen, dass die Wendel zusätzlichen Bauraum benötigt und die Länge der Luftfeder und damit des gesamten McPherson Federbeines vergrößert. Der für die Wendel notwendige Bauraum steht den modernen Kraftfahrzeugen nicht immer zur Verfügung.

Der Erfindung liegt die Aufgabe zugrunde, ein System der eingangs genannten Art zu schaffen, bei dem die Luftfeder einen geringen Bauraum benötigt und mit dem gleichzeitig sichergestellt ist, dass die Schlauchleitung bei Drehbewegungen der Luftfeder um ihre Längsachse nicht beschädigt wird.

Die Aufgabe wird durch die kennzeichnenden Merkmale des Anspruchs 1 gelöst.

Vorzugsweise liegt die Einlassöffnung in dem Luftfederdeckels außerhalb von dessen Zentrum, das durch den Punkt gegeben ist, in dem die Längsachse der Luftfeder den Luftfederdeckel durchstößt. Eine derartige Lage führt dazu, dass sich die Einlassöffnung bei einer Drehung der Luftfeder um ihre Längsachse auf einem Kreisbogen bewegt und die Schlauchleitung dieser Bewegung folgen kann, ohne dass sie verdrillt wird.

Der mit der Erfindung erzielte Vorteil ist darin zu sehen, dass unterhalb des Trägers (d.h. also auf der Seite der Luftfeder) für das Dehnelement kein Bauraum zur Verfügung gestellt werden braucht, so dass die auf dieser Seite des Trägers angeordnete Luftfeder nur einen geringen Bauraum benötigt (alternativ kann der zusätzlich zur Verfügung stehende Bauraum, der bei der DE 199 22 798 A1 für das Dehnelement benötigt wird, für eine Verlängerung der Luftfeder genutzt werden). Ein weiterer Vorteil der Erfindung ist darin zu sehen, dass die Schlauchleitung von der Seite des Trägers, auf der sich das Dehnelement befindet, einfach durch die Öffnung des Trägers zu der Einlassöffnung in dem Luftfederdeckel geführt und an diesen angeschlossen werden kann. Eine einfache Montage der Schlauchleitung an den Luftfederdeckel der Luftfeder ist somit möglich.

Gemäß einer Weiterbildung der Erfindung nach Anspruch 2 enthält der Träger auf seiner von der Luftfeder abgewandten Seite einen Anschlussstutzen, an dem die Schlauchleitung derart befestigt ist, dass das Dehnelement in dem Teil der Schlauchleitung liegt, die von der Öffnung im Träger zu dem Anschlussstutzen führt. Der Vorteil dieser Weiterbildung ist darin zu sehen, dass der Anschlussstutzen in der Nähe der Luftfeder liegt und das Dehnelement an dem Anschlussstutzen befestigt ist. Somit ist eine definierte elastische Verformung des Dehnelementes in Längsrichtung der Schlauchleitung bei einer Drehbewegung der Luftfeder um ihre Längsachse sichergestellt.

Gemäß einer Weiterbildung der Erfindung nach Anspruch 3 weist der Anschlussstutzen einen Luftkanal mit zwei Anschlüssen auf, wobei an den ersten Anschluss der Teil der Schlauchleitung befestigt ist, der von der Einlassöffnung der Luftfeder zu dem Anschlussstutzen führt, und an dem zweiten Anschluss der Teil der Schlauchleitung befestigt ist, der von dem Anschlussstutzen zu einer Druckluftquelle führt. Der Teil der Schlauchleitung, der lösbar an dem ersten Anschluss des Anschlussstutzens befestigt ist, unterliegt hohen mechanischen Belastungen. Dies ist darauf zurückzuführen, dass dieser Teil der Schlauchleitung Umwelteinflüssen ausgesetzt ist, da er zum Teil im Radkasten verläuft. Der Vorteil der Weiterbildung ist darin zu sehen, dass dieser Teil der Schlauchleitung einfach ausgewechselt werden kann und der restliche Teil der Schlauchleitung, der von dem zweiten Anschluss zur der Druckluftquelle führt und nur geringen Belastungen ausgesetzt ist, weiterverwendet werden kann.

Gemäß einer Weiterbildung der Erfindung nach Anspruch 4 ist der Anschlussstutzen als Gehäuse für das Dehnelement ausgebildet. Der Vorteil dieser Weiterbildung ist darin zu sehen, dass das Dehnelement zuverlässig vor Verschmutzung und daraus resultierendem Abrieb geschützt ist, so dass es über einen langen Zeitraum störungsfrei funktioniert.

Gemäß einer Weiterbildung der Erfindung nach Anspruch 5 ist der Anschlussstutzen aus Kunststoff. Der Vorteil dieser Weiterbildung ist darin zu sehen, dass der Anschlussstutzen als preiswertes Spritzgussteil hergestellt werden kann.

Gemäß einer Weiterbildung der Erfindung nach Anspruch 6 weist der Luftfederdeckel mindestens eine Stützstelle auf, an der die Schlauchleitung befestigt ist. Vorzugsweise weist der Luftfederdeckel zwei Stützstellen auf. Der Vorteil dieser Weiterbildung ist darin zu sehen, dass der Anschluss der Schlauchleitung an die Einlassöffnung im Luftfederdeckel bei einer Drehbewegung der Luftfeder nicht mit Biegemomenten belastet wird, da die hierdurch entstehenden Belastungen von den Stützstellen aufgenommen werden. Somit ist einer Undichtigkeit der Schlauchleitung im Bereich der Anschlussstelle an die Einlassöffnung sicher vorgebeugt.

Gemäß einer Weiterbildung der Erfindung nach Anspruch 7 liegt die Schlauchleitung in dem Teil, der von der Einlassöffnung zu der Stützstelle führt, in etwa in einer Ebene, auf der die Längsachse der Luftfeder senkrecht steht. Der Vorteil dieser Weiterbildung ist darin zu sehen, dass bei einer derartigen Ausrichtung der Schlauchleitung diese einer Drehbewegung der Luftfeder besonders gut folgen kann.

Gemäß einer Weiterbildung der Erfindung nach Anspruch 8 verläuft die Schlauchleitung in dem Teil, der von der Einlassöffnung zu der Stützstelle führt, in etwa entlang einem Kreisbogenabschnitt und wird ab der Stützstelle in tangentialer Richtung zu der Öffnung geführt wird. Wenn mehrere Stützstellen vorhanden sind, wird die Schlauchleitung bis zu der Stützstelle, die am weitesten von der Einlassöffnung entfernt ist, entlang einem Kreisbogenabschnitt geführt und an dieser Stützstelle in tangentialer Richtung. Der Vorteil dieser Weiterbildung ist darin zu sehen, dass bei einem derartigen Verlauf der Schlauchleitung diese einer Drehbewegung der Luftfeder besonders gut folgen kann.

Das Dehnelement kann beispielsweise dadurch ausgebildet werden, dass die Schlauchleitung in einem Bereich meanderförmig ausgebildet ist.

Gemäß einer Weiterbildung der Erfindung nach Anspruch 9 ist das Dehnelement jedoch vorzugsweise als Wendel ausgebildet. Der Vorteil dieser Weiterbildung ist darin zu sehen, dass mit Hilfe einer Wendel eine elastische Verformung der Schlauchleitung besonders einfach und Platz sparend zu realisieren ist.

Gemäß einer Weiterbildung der Erfindung nach Anspruch 10 steht die Längsachse der Wendel in etwa senkrecht zur Längsachse der Luftfeder. Der Vorteil dieser Weiterbildung ist darin zu sehen, dass die genannte Ausrichtung der Wendel eine elastische Verformung der Schlauchleitung in ihrer Längsrichtung besonders gut zulässt.

Ein Ausführungsbeispiel und weitere Vorteile der Erfindung werden im Zusammenhang mit den nachstehenden Figuren erläutert, darin zeigt:
- Fig. 1: ein System mit einem Luftfederbein und einem Träger in schematischer Darstellung,
- Fig. 2: das in der Fig. 1 gezeigte System in Draufsicht,
- Fig. 3: einen Ausschnitt aus der Fig. 1,
- Fig. 4: einen Schnitt entlang der in der Fig. 3 gezeigten Linie IV/IV.

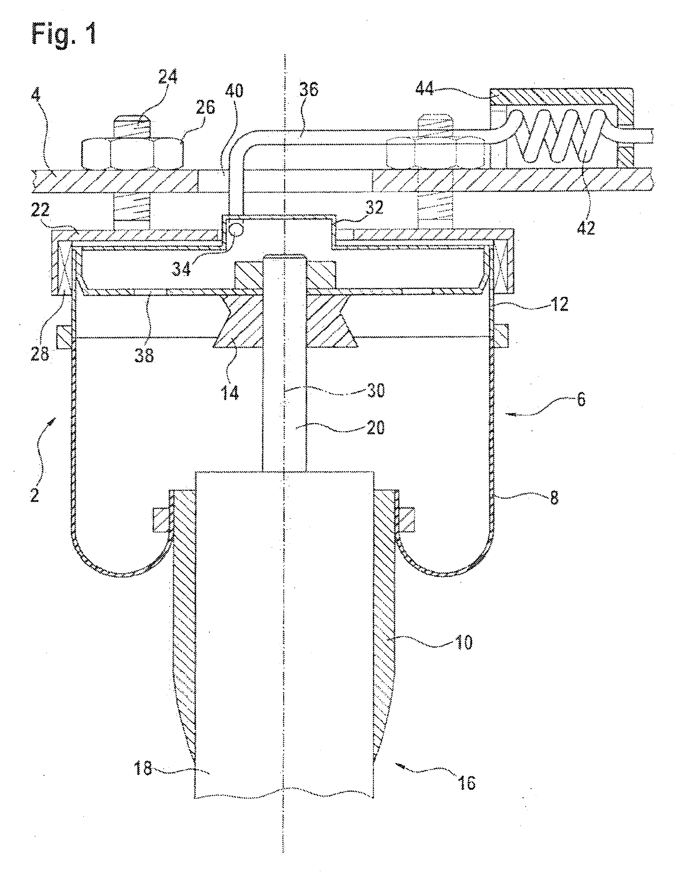

Fig. 1 zeigt in schematischer Darstellung ein System mit einem McPherson Luftfederbein 2 und einem Träger 4 in Form eines Federbeindoms. Der Federbeindom ist Bestandteil eines Kotflügels einer Fahrzeugkarosserie. Das Luftfederbein 2 enthält eine Luftfeder 6 mit einem Rollbalg 8, der an seinem unteren Ende an einem Abrollkolben 10 und an seinem oberen Ende an einem Luftfederdeckel 12 befestigt ist und ein Luftvolumen umschließt.

An dem Luftfederdeckel 12 ist über ein Elastomerbauteil 14 ein Stoßdämpfer 16 mit einem Zylinderrohr 18 und einer Kolbenstange 20 befestigt, wobei ein nicht gezeigter Stoßdämpferkolben fest mit der Kolbenstange 20 verbunden ist und innerhalb des Zylinderrohres 18 beweglich ist. Der Abrollkolben 10 ist als separates Bauteil ausgebildet und stützt sich auf dem Zylinderrohr 18 ab. Alternativ kann das Zylinderrohr 18 direkt als Abrollkolben genutzt werden.

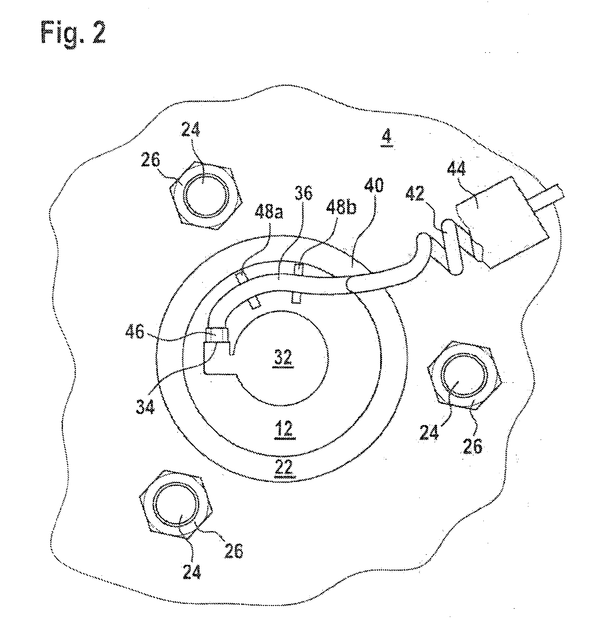

An seinem unteren Ende stützt sich das Luftfederbein 2 an einem (nicht gezeigten) Radträger ab. An seinem oberen Ende ist das Luftfederbein 2 an dem Träger 4 der Fahrzeugkarosserie, der oberhalb des Luftfederdeckels 12 angeordnet ist, befestigt. Die Befestigung des Luftfederdeckels 12 an dem Träger 4 erfolgt über ein Stützteil 22, das Schrauben 24 (siehe auch Fig. 2) enthält. Die Schrauben 24 sind durch Öffnungen in dem Träger 4 geführt und mit Hilfe von Muttern 26 an dem Träger befestigt. Zwischen dem Stützteil 22 und dem Luftfederdeckel 12 befinden sich Lager 28, z.B. in Form von Wälzlagern, so dass der Luftfederdeckel 12 (und damit die Luftfeder 6) um die Längsachse 30 der Luftfeder drehbar an dem Träger 4 befestigt ist.

Der Luftfederdeckel 12 weist in seinem Zentrum eine Erhebung 32 mit einer Einlassöffnung 34 auf. Die Einlassöffnung 34 liegt (vorzugsweise) ca. 2 cm bis 5 cm seitlich von dem Zentrum der Erhebung 32, der durch den Punkt gegeben ist, durch den die Längsachse 30 der Luftfeder 6 geht. Dies führt dazu, dass sich die Einlassöffnung 34 bei einer Drehbewegung der Luftfeder 6 um die Längsachse 30 auf einem Kreisbogenabschnitt bewegt. An die Einlassöffnung 34 ist eine Schlauchleitung 36 angeschlossen, die an ihrem anderen Ende an eine (nicht gezeigte) Druckluftquelle angeschlossen ist. Über die Schlauchleitung 36 kann durch die Einlassöffnung 34 und durch die Öffnungen 38 in dem Luftfederdeckel 12 Druckluft in den Innenraum der Luftfeder 6 überführt werden.

Ausgehend von der Einlassöffnung 34 wird die Schlauchleitung 36 durch eine Öffnung 40 des Trägers geführt, so dass ein erster Teil der Schlauchleitung 36 auf einer Seite (unterhalb) des Trägers liegt und ein zweiter Teil der Schlauchleitung 36 auf der anderen Seite (oberhalb) des Trägers 4 liegt. Die Schlauchleitung 36 weist in dem Teil, der oberhalb des Trägers 4 liegt, ein Dehnelement 42 auf, das eine elastische Verformung der Schlauchleitung 36 in ihrer Längsrichtung zulässt. Vorzugsweise ist das Dehnelement 42 als Wendel 42 ausgebildet so wie es auch in der Fig. 1 gezeigt ist. Die Längsachse der Wendel 42 steht bei dem in der Fig. 1 gezeigten Ausführungsbeispiel in etwa senkrecht zur Längsachse 30 der Luftfeder 6. Die Wendel 42 weist eine Länge von ca. 2cm bis 10 cm und ca. 2 bis 10 Windungen auf. Durch die Länge und die Anzahl der Windungen ist sichergestellt, dass sich die Schlauchleitung 36 in ihrer Längsrichtung ausreichend elastisch verformen kann.

Der Träger 4 enthält auf seiner Seite, die dem Luftfederbein 2 abgewandt ist, einen Anschlussstutzen 44, an dem die Schlauchleitung 36 derart befestigt ist, dass das Dehnelement 42 in dem Teil der Schlauchleitung 36 liegt, die von der Öffnung 40 im Träger 4 zu dem Anschlussstutzen 44 führt. Der Anschluss 44 ist als Gehäuse ausgebildet, dass das Dehnelement 42 vollständig umschließt. Vorzugsweise besteht der Anschlussstutzen 44 aus Kunststoff.

Fig. 2 zeigt das in der Fig. 1 gezeigte System in Draufsicht. Der Fig. 2 ist ein Ausschnitt des Trägers 4 zu entnehmen, an dem das Luftfederbein 2 mit Hilfe der Schrauben 24 und Muttern 26 befestigt ist. Das Zentrum des Trägers 4 ist aufgebrochen dargestellt, so dass die Erhebung 32 des Luftfederdeckels 12 (siehe Fig. 1) in Draufsicht zu sehen ist. Die Erhebung 32 weist in ihrer Seitenwand einen Anschluss 46 auf, in dem die Einlassöffnung 34 liegt.

Der Anschluss 46 ist so ausgerichtet, dass seine Längsachse senkrecht zu der Längsachse 30 der Luftfeder 6 (siehe Fig. 2) liegt. An den Anschluss 46 ist die Schlauchleitung 36 angeschlossen. Ausgehend von dem Anschluss 46 wird die Schlauchleitung 36 zu der Öffnung 40 in dem Träger 4 und durch diese hindurch geführt. Zwischen dem Anschluss 46 und der Öffnung 40 sind auf dem Luftfederdeckel 12 Stützstellen 48a, 48b angebracht, in die die Schlauchleitung 36 eingeklemmt ist. Von dem Anschluss 46 bis zu der Stützstelle 48b, die am weitesten von dem Anschluss 46 entfernt ist, verläuft die Schlauchleitung 36 in etwa in einer Ebene, auf der die Längsachse 30 der Luftfeder 6 senkrecht steht (die Schlauchleitung verläuft also in diesem Bereich in der Zeichenebene). Ferner verläuft die Schlauchleitung 36 von dem Anschluss 46 bis zu der Stützstelle 48b in etwa entlang einem Kreisbogenabschnitt, den sie ab der Stützstelle 48b in tangentialer Richtung verlässt. Dies führt dazu, dass die Schlauchleitung 36 einer Drehung der Luftfeder 6 um die Längsachse 30 (siehe Fig. 1) gut folgen kann.

Ausgehend von der Öffnung 40 in dem Träger 4 wird die Schlauchleitung 36 zu dem Anschlussstutzen 44 geführt, an dem die Schlauchleitung 36 befestigt ist. In dem Anschlussstutzen 44 liegt das Dehnelement 42.

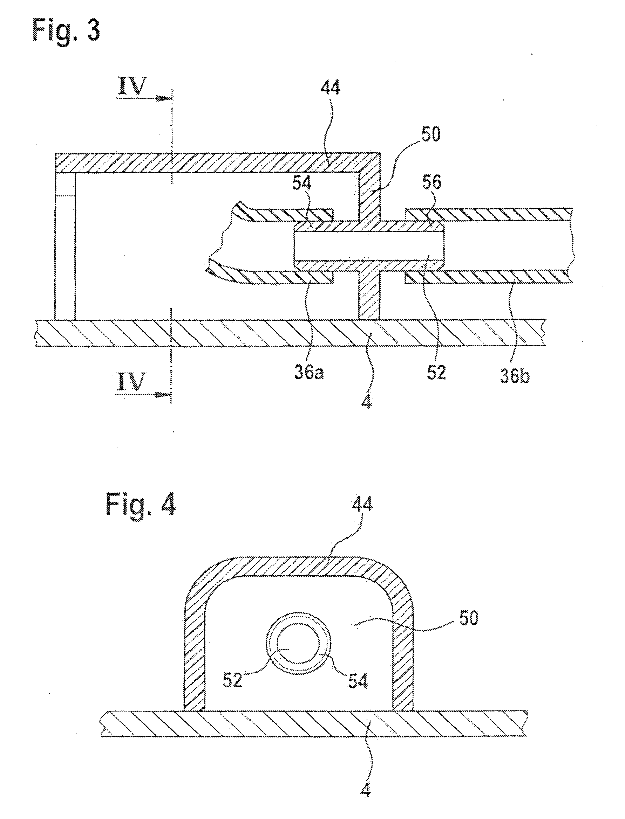

Fig. 3 zeigt den auf dem Träger 4 befestigten Anschlussstutzen 44 in vergrößerter Darstellung. Der Anschlussstutzen 44 ist als Gehäuse ausgebildet und weist an seiner Seitenwand 50 einen Luftkanal 52 mit zwei Anschlüssen 54, 56 auf. An den ersten Anschluss 54 ist der Teil 36a der Schlauchleitung 36 befestigt, der von der Einlassöffnung 34 (siehe Figuren 1 und 2) zu dem Anschlussstutzen 44 führt. An dem zweiten Anschluss 56 ist der Teil 36b der Schlauchleitung 36 befestigt, der von dem Anschlussstutzen 56 zu einer (nicht gezeigten) Druckluftquelle führt.

Fig. 4 zeigt einen Schnitt entlang der in der Fig. 3 gezeigten Linie IV/IV. Der Fig. IV ist zu entnehmen, dass der Anschlussstutzen 44 als Gehäuse ausgebildet ist, das zur Aufnahme des Dehnelementes 42 (in der Fig. 4 nicht gezeigt) zu einer Seite hin offen ist und an der anderen Seite eine Seitenwand 50 enthält, auf der sich der Anschluss 54 mit dem Luftkanal 52 befindet.

### Bezugszeichenliste

### (Teil der Beschreibung)

- 2: Luftfederbein
- 4: Träger
- 6: Luftfeder
- 8: Rollbalg
- 10: Abrollkolben
- 12: Luftfederdeckel
- 14: Elastomerbauteil
- 16: Stoßdämpfer
- 18: Zylinderrohr
- 20: Kolbenstange
- 22: Stützteil
- 24: Schraube
- 26: Mutter
- 28: Lager
- 30: Längsachse der Luftfeder
- 32: Erhebung
- 34: Einlassöffnung
- 36: Schlauchleitung
- 38: Öffnung im Luftfederdeckel
- 40: Öffnung im Träger
- 42: Dehnelement
- 44: Anschlussstutzen
- 46: Anschluss
- 48: Stützstelle
- 50: Seitenwand
- 52: Luftkanal
- 54, 56: Anschluss

## Patentansprüche

1. System, das folgende Bestandteile enthält:
- eine Luftfeder (6) mit einem Rollbalg (8), der an seinem unteren Ende an einem Abrollkolben (10) und an seinem oberen Ende an einem Luftfederdeckel (12) befestigt ist, und der ein Luftvolumen umschließt,
- einen Träger (4), der oberhalb des Luftfederdeckels (12) angeordnet ist und an dem der Luftfederdeckel (12) um die Längsachse (30) der Luftfeder (6) drehbar befestigt ist,
- eine Schlauchleitung (36), die an eine in dem Luftfederdeckel (12) liegende Einlassöffnung (34) angeschlossen ist und die ein Dehnelement (42) aufweist, das bei Drehbewegungen des Luftfederdeckels (12) um die Längsachse (30) der Luftfeder (6) zumindest bereichsweise eine elastische Verformung der Schlauchleitung (36) zulässt,
**dadurch gekennzeichnet, dass**
- die Schlauchleitung (36) ausgehend von der Einlassöffnung (34) im Luftfederdeckel (12) durch eine Öffnung (40) des Trägers (4) geführt ist, so dass ein erster Teil der Schlauchleitung (36) auf der Seite des Trägers (4) liegt, die der Luftfeder (6) zugewandt ist, liegt, und ein zweiter Teil der Schlauchleitung (36) auf der anderen Seite des Trägers (4), die der Luftfeder (6) abgewandt ist, liegt, und dass
- das Dehnelement (42) im zweiten Teil der Schlauchleitung (36) liegt und derart ausgebildet ist, dass es eine elastische Verformung der Schlauchleitung (36) in ihrer Längsrichtung zulässt.

2. System nach Anspruch 1, **dadurch gekennzeichnet, dass** der Träger (4) auf seiner von der Luftfeder (6) abgewandten Seite einen Anschlussstutzen (44) enthält, an dem die Schlauchleitung (36) derart befestigt ist, dass das Dehnelement (42) in dem Teil der Schlauchleitung (36) liegt, der von der Öffnung (40) im Träger (4) zu dem Anschlussstutzen (44) führt.

3. System nach Anspruch 2, **dadurch gekennzeichnet, dass** der Anschlussstutzen (44) einen Luftkanal (52) mit zwei Anschlüssen (54, 56) aufweist, wobei an den ersten Anschluss (54) der Teil der Schlauchleitung (36) befestigt ist, der von der Einlassöffnung (34) der Luftfeder (6) zu dem Anschlussstutzen (44) führt, und an dem zweiten Anschluss (56) der Teil der Schlauchleitung (36) befestigt ist, der von dem Anschlussstutzen (44) zu einer Druckluftquelle führt.

4. System nach einem der Ansprüche 2 bis 3, **dadurch gekennzeichnet, dass** der Anschlussstutzen (44) als Gehäuse für das Dehnelement (42) ausgebildet ist.

5. System nach einem der Ansprüche 2 bis 4, **dadurch gekennzeichnet, dass** der Anschlussstutzen (44) aus Kunststoff ist.

6. System nach einem der Ansprüche 1 bis 5, **dadurch gekennzeichnet, dass** der Luftfederdeckel (12) mindestens eine Stützstelle (48) aufweist, an der die Schlauchleitung (36) befestigt ist.

7. System nach einem der Ansprüche 1 bis 6, **dadurch gekennzeichnet, dass** die Schlauchleitung (36) in dem Teil, der von der Einlassöffnung (34) zu der Stützstelle (48) führt, in etwa in einer Ebene liegt, auf der die Längsachse (30) der Luftfeder (6) senkrecht steht.

8. System nach Anspruch 7, **dadurch gekennzeichnet, dass** die Schlauchleitung (36) in dem Teil, der von der Einlassöffnung (34) zu der Stützstelle (48) führt, in etwa entlang einem Kreisbogenabschnitt verläuft und ab der Stützstelle (48) in tangentialer Richtung zu der Öffnung (40) geführt wird.

9. System nach einem der Ansprüche 1 bis 8, **dadurch gekennzeichnet, dass** das Dehnelement (42) als Wendel ausgebildet ist.

10. System nach Anspruch 9, **dadurch gekennzeichnet, dass** die Längsachse der Wendel in etwa senkrecht zur Längsachse (30) der Luftfeder (6) steht.

## Claims

1. System which comprises the following components:
- an air spring (6) having a rolling bellows (8) which is fastened at its lower end to a rolling piston (10) and at its upper end to an air spring cover (12) and which encompasses an air volume,
- a bracket (4) which is arranged above the air spring cover (12) and to which the air spring cover (12) is fastened so as to be rotatable about the longitudinal axis (30) of the air spring (6),
- a hose line (36) which is connected to an inlet opening (34) situated in the air spring cover (12) and which has an expansion element (42) which, in the event of rotational movements of the air spring cover (12) about the longitudinal axis (30) of the air spring (6), permits an elastic deformation of the hose line (36) at least in regions,
**characterized in that**
- the hose line (36) is guided, proceeding from the inlet opening (34) in the air spring cover (12), through an opening (40) in the bracket (4) such that a first part of the hose line (36) is situated on that side of the bracket (4) which faces towards the air spring (6) and a second part of the hose line (36) is situated on the other side, which faces away from the air spring (6), of the bracket (4), and **in that**
- the expansion element (42) is situated in the second part of the hose line (36) and is designed so as to permit an elastic deformation of the hose line (36) in its longitudinal direction.

2. System according to Claim 1, **characterized in that** the bracket (4) comprises, on its side facing away from the air spring (6), a connection piece (44) to which the hose line (36) is fastened in such a way that the expansion element (42) is situated **in that** part of the hose line (36) which leads from the opening (40) in the bracket (4) to the connection piece (44).

3. System according to Claim 2, **characterized in that** the connection piece (44) has an air duct (52) with two connectors (54, 56), with the first connector (54) having fastened to it that part of the hose line (36) which leads from the inlet opening (34) of the air spring (6) to the connection piece (44), and the second connector (56) having fastened to it that part of the hose line (36) which leads from the connection piece (44) to a compressed air source.

4. System according to one of Claims 2 to 3, **characterized in that** the connection piece (44) is designed as a housing for the expansion element (42).

5. System according to one of Claims 2 to 4, **characterized in that** the connection piece (44) is formed from plastic.

6. System according to one of Claims 1 to 5, **characterized in that** the air spring cover (12) has at least one support point (48) to which the hose line (36) is fastened.

7. System according to one of Claims 1 to 6, **characterized in that** the hose line (36), **in that** part which leads from the inlet opening (34) to the support point (48), lies approximately in a plane perpendicular to the longitudinal axis (30) of the air spring (6).

8. System according to Claim 7, **characterized in that** the hose line (36), **in that** part which leads from the inlet opening (34) to the support point (48), runs approximately along a section of a circular arc, and beyond the support point (48), is guided in the tangential direction with respect to the opening (40).

9. System according to one of Claims 1 to 8, **characterized in that** the expansion element (42) is designed as a coil.

10. System according to Claim 9, **characterized in that** the longitudinal axis of the coil is approximately perpendicular to the longitudinal axis (30) of the air spring (6).

## Revendications

1. Système contenant les composants suivants :
- un amortisseur pneumatique (6) doté d'un soufflet déroulant (8) dont l'extrémité inférieure est fixée à un piston de déroulement (10) et l'extrémité supérieure à un couvercle (12) d'amortisseur pneumatique, l'amortisseur pneumatique enfermant un volume d'air,
- un support (4) disposé au-dessus du couvercle (12) de l'amortisseur pneumatique et sur lequel le couvercle (12) de l'amortisseur pneumatique est fixé de manière à pouvoir tourner autour de l'axe longitudinal (30) de l'amortisseur pneumatique (6) et
- un conduit souple (36) raccordé à une ouverture d'admission (34) située dans le couvercle (12) de l'amortisseur pneumatique et présentant un élément extensible (42) qui permet une déformation élastique d'au moins certaines parties du conduit flexible (36) en cas de déplacement de rotation du couvercle (12) de l'amortisseur pneumatique autour de l'axe longitudinal (30) de l'amortisseur pneumatique (6),
**caractérisé en ce que**
partant de l'ouverture d'admission (34) dans le couvercle (12) de l'amortisseur pneumatique, le conduit souple (36) traverse une ouverture (40) du support (4) de telle sorte qu'une première partie du conduit flexible (36) soit située sur le côté du support (4) tourné vers l'amortisseur pneumatique (6) et qu'une deuxième partie du conduit flexible (36) repose sur l'autre côté du support (4) qui n'est pas tourné vers l'amortisseur pneumatique (6) et
**en ce que** l'élément extensible (42) est situé dans la deuxième partie du conduit flexible (36) et est configuré de manière à permettre une déformation élastique du conduit flexible (36) dans le sens de sa longueur.

2. Système selon la revendication 1, **caractérisé en ce que** sur son côté non tourné vers l'amortisseur pneumatique (6), le support (4) contient une tubulure de raccordement (44) à laquelle le conduit flexible (36) est fixé de telle sorte que l'élément extensible (42) soit situé dans la partie du conduit flexible (36) qui conduit de l'ouverture (40) ménagée dans le support (4) jusqu'à la tubulure de raccordement (44).

3. Système selon la revendication 2, **caractérisé en ce que** la tubulure de raccordement (44) présente un canal d'air (52) doté de deux raccords (54, 56), **en ce que** la partie du conduit flexible (36) qui conduit de l'ouverture d'admission (34) de l'amortisseur pneumatique (6) à la tubulure de raccordement (44) est fixée sur le premier raccord (54) et **en ce que** la partie du conduit flexible (36) qui conduit de la tubulure de raccordement (44) à une source d'air comprimé est fixée sur le deuxième raccord (56).

4. Système selon l'une des revendications 2 à 3, **caractérisé en ce que** la tubulure de raccordement (44) est configurée comme boîtier pour l'élément extensible (42).

5. Système selon l'une des revendications 2 à 4, **caractérisé en ce que** la tubulure de raccordement (44) est réalisée en matière synthétique.

6. Système selon l'une des revendications 1 à 5, **caractérisé en ce que** le couvercle (12) de l'amortisseur pneumatique présente au moins un emplacement d'appui (48) sur lequel le conduit flexible (36) est fixé.

7. Système selon l'une des revendications 1 à 6, **caractérisé en ce que** dans sa partie qui conduit de l'ouverture d'admission (34) à l'emplacement d'appui (48), le conduit flexible (36) est situé sensiblement dans un plan perpendiculaire à l'axe longitudinal (30) de l'amortisseur pneumatique (6).

8. Système selon la revendication 7, **caractérisé en ce que** dans sa partie qui conduit de l'ouverture d'admission (34) à l'emplacement d'appui (48), le conduit flexible (36) suit un parcours en arc de cercle et **en ce qu'**à partir de l'emplacement d'appui (48), il est guidé dans la direction tangentielle vers l'ouverture (40).

9. Système selon l'une des revendications 1 à 8, **caractérisé en ce que** l'élément extensible (42) est configuré en spirale.

10. Système selon la revendication 9, **caractérisé en ce que** la longueur de la spirale est sensiblement perpendiculaire à l'axe longitudinal (30) de l'amortisseur pneumatique (6).
